# FASCICULE DE BREVET EUROPEEN

(11) **EP 2 018 909 B1**
(45) Date de publication et mention de la délivrance du brevet: **13.09.2017**
(21) Numéro de dépôt: 07002603.4
(22) Date de dépôt: 17.12.2001
(51) Int. Cl.: B03C 3/60, B03C 3/47, B03C 3/09, B03C 3/41

(54) **Dispositif d'émission ionique**
Vorrichtung zur ionischen Emission
Device for ionic emission

(43) Date de publication de la demande: 28.01.2009
(62) Demande divisionnaire de: 01994883.5
(73) Titulaire: Airinspace B.V., 2628 XH Delft (NL)
(72) Inventeur: Nagolkin, Alexandre Vladimirovitch, Moscou 129090 (RU); Volodna, Elena Vladimirovitch, Moscou 123242 (RU)
(74) Mandataire: Barbot, Willy

(56) Documents cités:
- EP-A- 0 425 433
- BE-A- 368 865
- US-A- 1 767 338
- US-A- 5 695 549
- US-A- 5 807 425
- US-A- 5 993 520

## Description

### Domaine technique de l'invention

L'invention se rapporte au domaine technique des dispositifs électrostatiques de traitement d'air, et plus spécifiquement aux dispositifs pour soumettre une multitude de particules (telles que : poussières, bio-aérosols ou molécules spécifiques, ...) aérosols au sein d'un fluide en mouvement, à l'action d'un flux ionique provenant d'une électrode à décharge corona, ceci en vue :
- d'une part, d'homogénéiser le flux d'ions en regard de la face active plane d'une électrode réceptrice, et,
- d'autre part, de déposer sur la surface de cette multitude de particules aérosols (appartenant à une même classe de diamètres) une quantité quasi homogène d'ions.

Cette homogénéisation du dépôt d'ions sur la surface des particules peut avoir pour but de leur infliger des conséquences mécaniques, physiques, chimiques, énergétiques ... d'intensité maîtrisée.

L'invention se rapporte spécifiquement au domaine technique des dispositifs électrostatiques d'émission et dépôt ionique du type décrit ci-après, constitué par la combinaison entre : - d'une part, une électrode conductrice corona à décharge, émettant un flux d'ions, - et d'autre part une électrode réceptrice conductrice poreuse dont la surface active comporte une pluralité de points sensiblement acérés.

L'invention se rapporte aussi à des dispositifs d'ionisation qui sont équipés d'une source de courant électrique comprenant au moins deux bornes métalliques, de différence de potentiel électrique assez élevé entre elles (de l'ordre de 5000V). Au moins deux conducteurs sont reliés chacun - par une extrémité à une des deux bornes de potentiel et/ou à la terre, - et par l'autre extrémité respectivement à l'une différente des électrodes corona et réceptrice, en sorte que les deux électrodes (corona et réceptrices) soient soumises à une différence de potentiel électrique suffisante pour assurer l'émission ionique dans la zone de décharge de l'électrode corona.

L'art antérieur connaît le principe de dispositifs d'action électrostatique par flux ionique sur des particules aérosols, mettant en oeuvre les dispositions ci-dessus. Les dispositifs appartenant à ce domaine technique sont actuellement principalement utilisés pour filtrer électrostatiquement des particules transportées par un flux d'air.

Mais l'art antérieur ne prévoit pas d'organisation géométrique particulière locale de la face active de l'électrode réceptrice ayant pour effet une homogénéisation du flux d'ions sur la face de l'électrode réceptrice et/ou une homogénéisation du nombre d'ions déposé sur la surface des particules de même taille, entraînées par le fluide.

Au contraire, le dispositif électrostatique d'émission ionique selon l'invention comporte une géométrie locale particulière de la face active de son électrode de réception permettant d'établir un flux surfacique d'ions, en provenance de l'électrode corona et en direction de la face active pseudo plane de l'électrode réceptrice, ayant une intensité ponctuelle ionique présentant au voisinage de la face active une répartition spatiale d'intensité ionique à homogénéité accrue.

En outre l'invention permet de rendre quasi homogène le nombre d'ions déposés sur la surface des particules aérosols d'une même classe de taille.

### Etat de la technique antérieure

Le dispositif électrostatique d'homogénéisation de flux ionique de l'invention a des applications beaucoup plus larges que celles du domaine de la filtration. Néanmoins, l'art antérieur le plus proche est essentiellement constitué par les filtres électrostatiques de poussières et auxiliairement par certains dispositifs de dépôt d'ions sur des surfaces dans le domaine de la xérographie. En conséquence, l'analyse de l'art antérieur ci-après vise principalement ces deux domaines techniques et plus généralement les différentes techniques de filtration de poussières et de xérographie mettant en oeuvre une combinaison entre une électrode corona émettant des ions et une électrode réceptrice poreuse.

Pour des raisons médicales, sanitaires et de pureté de l'air, il est souhaitable de filtrer les petites particules de l'air et notamment les poussières industrielles, pollens, bactéries, virus, champignons, algues, et autres fines poussières... En dehors des systèmes fonctionnant par gravitation (dépôt des particules du fait de leur poids) et des systèmes cyclones fonctionnant par effet de force centrifuge (qui sont tous deux utilisés dans certaines applications industrielles spécifiques et aboutissent à des systèmes de grand encombrement), les deux méthodes les plus courantes pour assurer une décontamination des poussières de l'air consistent : - l'une à barrer le flux d'air à l'aide d'un média (filtre mécanique), - et l'autre à dévier et capturer les poussières par méthode électrostatique (électrofiltre). Un filtre électrostatique est basé sur le fait que des particules, ayant une certaine charge, sont attirées par une électrode collectrice de la charge opposée. Cette méthode a été largement utilisée dans l'industrie depuis son invention par F.G. Cottrell en 1910. On utilise un moyen préalable pour donner une charge électrostatique aux particules, et, à l'aide d'un champ électrostatique, on précipite ces particules chargées sur une paroi collectrice ou un média collecteur maintenu sous tension électrique de signes opposés. Il existe principalement deux classes de structures de filtres électrostatiques: - ceux à un étage, - et ceux à deux étages. Il existe également deux variantes de moyens de précipitation électrostatique : - celle à électrodes chargées sous tension générée extérieurement par alimentation électrique, - et celle à auto-chargement électrostatique, chargées par le frottement d'air. Le domaine le plus proche de l'invention est celui des électrofiltres à deux étages dont un étage d'ionisation initiale par alimentation électrique extérieure.

Les électrofiltres à deux étages, également appelés précipitateurs électrostatiques, ont une complexité, un coût et une efficacité accrus. Ils comportent un étage de charge électrique par effet corona des particules et un étage de précipitation. Dans l'étage de charge électrique, l'air passe à travers une zone d'ionisation constituée généralement d'un ou plusieurs fils portés à haute tension électrique (électrodes corona) pour générer un champ électrostatique intense, au sein duquel les particules sont chargées électriquement par ionisation. Puis le flux d'air comprenant les particules chargées passe à travers un second étage de collection. On distingue deux types de filtres électrostatiques à deux étages, suivant la structure de l'étage collecteur des particules chargées (- à plaques, - ou à média filtrant).

Les particularités des électrofiltres qui sont voisines des enseignements de l'invention concernent exclusivement la génération préalable d'ions et leur dépôt sur les particules à filtrer (et plus spécifiquement la maîtrise de l'homogénéité du flux d'ions) et non l'efficacité de la précipitation des poussières.

Un premier défaut majeur des systèmes d'ionisation selon l'art antérieur est qu'ils ne présentent pas de moyens permettant de déposer une quantité uniforme d'ions sur les particules aérosols traitées. Cela a pour conséquence qu'une partie des particules reçoit généralement une quantité suffisante d'ions (voir plus importante que nécessaire) et une autre reçoit une quantité trop faible d'ions pour aboutir à un résultat physique suffisant ultérieur. Cela réduit l'efficacité des électrofiltres.

Une deuxième limitation de l'art antérieur relatif au traitement ionique des particules est qu'il ne prévoit pas de disposition visant à déposer, sur des particules aérosols, une quantité quasi homogène d'ions (i^{q+}) et (i^{q-}) de charges opposées. Cela semble dû au fait qu'au premier abord, il apparaît non souhaitable (voir néfaste) de déposer des charges opposées sur une même particule aérosol. En effet, le bon sens tend à amener à considérer que les ions de charge opposée vont s'annuler et qu'on obtiendra donc un effet physique amoindri. Les inventeurs ont établi que dans des applications industrielles particulières, il pouvait être souhaitable de déposer sur la surface extérieure de particules aérosols (notamment de même diamètre et/ou de même nature) des quantités d'ions à la fois de charge opposée et de quantité quasi homogène pour chaque signe.

Ces deux premiers types de défauts de l'art antérieur sont principalement dus au fait que le flux d'air traité a une section transversale généralement très supérieure à la dimension transversale efficace des zones de décharge des électrodes coronas utilisées. De ce fait, et en l'absence de corrections liées à une géométrie particulière locale de l'électrode réceptrice, le flux d'ions atteignant les particules aérosols décroît très fortement dans la direction transversale du flux de fluide.

Un troisième défaut de l'art antérieur est que lorsqu'il vise à homogénéiser un flux d'ions, il le fait : - soit dans le cas où il n'y a pas de déplacement de fluide (tel qu'au sein de systèmes xérographiques), - soit dans le cas d'une géométrie ne permettant pas le chargement ionique homogène de particules aérosols au sein de grands débits de fluides.

Les géométries particulières d'électrodes de réception mises en oeuvre par l'art antérieur au sein des générateurs ioniques agissant sur des particules aérosols (notamment au sein des électrofiltres) ne visent généralement pas à accroître l'homogénéité ionique mais simplement à accroître l'action électrostatique entre l'électrode réceptrice et les particules préalablement chargées, en vue d'accroître la capture des poussières. En outre, lorsque des géométries particulières d'électrodes de réception sont mises en oeuvre par l'art antérieur, il s'agit : - de géométries globales macroscopiques du système, - et non de géométries locales de surface ayant pour but une homogénéisation ionique, comme cela est le cas pour l'invention.

Le brevet US 4,904,283 décrit un système de filtration constitué par une unique électrode corona longiligne placée au centre d'un cylindre constitué d'un matériau filtrant et bouché à une extrémité. Le fluide chargé de particules est introduit à l'autre extrémité libre du cylindre filtrant. Le flux ionique dans ce tube corona cylindrique décroît en fonction inverse de la distance au centre. Le dépôt ionique sur les particules aérosols le traversant est donc très inhomogène dans la section du tube. Aucune géométrie locale particulière de la surface de l'électrode réceptrice (l'intérieur du cylindre) n'est prévue et/ou décrite pour accroître l'homogénéité de dépôt ionique. Ce dispositif ne permet pas et d'ailleurs ne revendique pas une homogénéisation du dépôt d'ions sur les particules aérosols.

Le brevet US 4,979,364 décrit un électrofiltre comprenant en amont un premier étage ionisant formé d'une série d'électrodes cylindriques à décharge, perpendiculaires au flux de fluide et un deuxième étage filtrant aval constitué d'un réseau longitudinal en nid d'abeilles soumis à un champ électrique ou magnétique. Aucune disposition géométrique locale de la surface de l'électrode réceptrice (nid d'abeilles) n'est prévue pour accroître l'homogénéité du dépôt d'ions sur les particules.

Le brevet US 4,910,637 vise à homogénéiser le flux d'ions transmis et la quantité d'ozone émise par une électrode corona au sein d'un système xérographique. Une « barrière » est placée entre l'électrode corona et le plan sur lequel doivent être déposés les ions. La barrière proposée est constituée a) soit d'un matériau dopé tel que du verre ou de la céramique, b) soit de verre ou de céramique poreuse, c) soit d'une dispersion de métal ou de céramique, d) soit d'un matériau conducteur ou semi-conducteur, e) soit d'un matériau fibreux ayant une fonction de catalyse. L'originalité de ce dispositif ne concerne donc pas une géométrie particulière de surface de l'électrode réceptrice mais un choix particulier de matériaux. En outre, ce dispositif est destiné au dépôt d'ions sur une surface plane et non sur des particules aérosols. Enfin le système ne fait intervenir aucun fluide en mouvement.

Le brevet US 4,871,515 décrit un filtre électrostatique comprenant une électrode corona et une électrode réceptrice dont la structure est munie de circonvolutions, pores ou crevasses pour accroître ses capacités de rétention. Aucune particularité géométrique locale de la surface de l'électrode réceptrice n'est prévue pour accroître l'homogénéité du flux ionique et du dépôt d'ions sur les particules aérosols.

Le brevet US 4,597,781 décrit un précipitateur électrostatique comprenant une électrode corona centrale générant des ions négatifs, entourée par une électrode de réception constituée d'un tube collecteur cylindrique. L'électrode réceptrice n'a aucune géométrie locale particulière de sa surface active. Le flux ionique dans ce tube corona cylindrique décroît en fonction inverse de la distance au centre. Le dépôt ionique sur les particules aérosols le traversant est donc très inhomogène.

Le brevet US 4,898,105 décrit un filtre électrostatique constitué d'un premier étage de chargement ionique constitué d'électrodes corona filaires placées transversalement au flux d'air et d'un deuxième étage de filtration (que l'on peut assimiler à une électrode réceptrice) formée d'une couche de granules non conductrices et de moyen pour créer un champ électrostatique transversal au travers de cette couche. Le système ne prévoit aucune géométrie particulière locale de la surface de la couche de granules ayant pour effet une homogénéisation du flux ionique en provenance du premier étage.

Le brevet US 4,313,739 décrit un dispositif pour extraire d'un gaz à purifier un gaz contaminant. Celui-ci est constitué d'un tube extérieur incluant un cylindre poreux (que l'on peut qualifier d'électrode réceptrice) placé intérieurement et d'une électrode corona filaire placée en son centre. Une différence de potentiel est appliquée entre l'électrode corona et le cylindre. Le gaz à purifier est introduit à une extrémité du cylindre. Le système permet d'extraire un gaz contaminant en fonction de sa différence de potentiel d'ionisation vis-à-vis de celle du gaz à purifier. La paroi du cylindre (électrode réceptrice) est soit constituée d'un matériau poreux, c'est-à-dire ne possédant aucune géométrie particulière de surface, soit munie de pores la traversant répartis sur sa circonférence. La face active de l'électrode réceptrice n'est munie d'aucune géométrie particulière (entourant les pores) sur sa face intérieure active. Ce dispositif ne permet pas et d'ailleurs ne revendique pas une homogénéisation du dépôt d'ions sur les particules aérosols.

Le brevet US 4,066,526 décrit un filtre électrostatique constitué d'une électrode corona et d'une électrode réceptrice. L'électrode réceptrice ne possède aucune géométrie particulière sur sa face active. Ce dispositif ne permet pas et d'ailleurs ne revendique pas une homogénéisation du dépôt d'ions sur les particules aérosols.

Le brevet US 4,056,372 décrit un précipitateur électrostatique constitué de plaques métalliques parallèles placées sous des tensions électriques alternées et munies de pointes sur leurs extrémités. Dans une variante, des électrodes coronas de type filaire sont placées en amont parallèlement et face à l'empilement des plaques. Le flux d'ions de décharge est émis transversalement entre les électrodes filaires coronas et des électrodes réceptrices filaires parallèles. Ce dispositif ne décrit pas d'électrode réceptrice placée transversalement au chemin du fluide. Les plaques ne constituent pas des électrodes réceptrices face aux électrodes coronas filaires. En outre, la surface des plaques n'est munie d'aucun orifice de forme quasi circulaire sur leur surface. Ce dispositif ne permet pas et d'ailleurs ne revendique pas une homogénéisation du dépôt d'ions sur les particules aérosols.

Le brevet US 5,622,543 décrit un purificateur d'air incluant une plaque plane génératrice d'anions (électrode corona) munie d'évidements faisant face à une électrode réceptrice plane munie de trous espacés. Ce dispositif ne comporte aucune géométrie particulière sur la surface de l'électrode réceptrice en vue de l'homogénéisation du dépôt d'ions sur les particules aérosols.

Le brevet US 5,402,639 décrit un système électrostatique pour dépoussiérer un gaz, constitué - d'un cylindre creux à paroi céramique en nid d'abeilles, présentant des orifices orientés radialement, débouchant de l'intérieur vers l'extérieur du cylindre et soumis à un champ électrique interne à l'aide d'électrodes extérieures, - et d'une électrode corona située en son centre. Outre ses orifices, le cylindre ne possède aucune géométrie locale de surface particulière sur sa face intérieure faisant face à l'électrode corona qui soit apte à permettre une homogénéisation du dépôt d'ions sur les particules aérosols. En outre, du fait de sa structure cylindrique, et pour les mêmes raisons que décrit plus haut, ce système assure un dépôt d'ions inhomogène sur les particules.

Le brevet US 4,920,266 décrit un système xérographique pour déposer des charges négatives sur une surface. Ce système comprend des électrodes coronas constituées d'une série de pointes disposées côte à côte linéairement, faisant face à une électrode réceptrice constituée d'une grille métallique percée d'orifices hexagonaux. Outres ses orifices, l'électrode réceptrice ne comporte pas de géométrie particulière de surface qui soit apte à permettre une homogénéisation du flux d'ions. En outre ce dispositif est destiné au dépôt d'ions sur une surface plane et non sur des particules aérosols. Enfin le système ne fait intervenir aucun fluide en mouvement.

Le brevet US 5,474,600, au nom des demandeurs, décrit un système de purification bactériologique, comprenant un étage d'ionisation formé d'une électrode réceptrice en métal cellulaire poreux et d'une électrode corona à décharge qui lui fait face. Aucune particularité géométrique locale de la surface de l'électrode réceptrice n'est prévue pour accroître l'homogénéité du flux ionique et du dépôt d'ions sur les particules aérosols.

Le document US-5 695 549 décrit un autre dispositif de l'art antérieur.

### Résumé de l'invention

Dans sa forme générale, l'invention se rapporte à un dispositif électrostatique d'émission ionique homogénéisée pour déposer sur la surface d'une multitude de particules aérosols au sein d'un fluide, appartenant à une même classe de diamètres, une quantité quasi homogène d'ions de même charge.

Un dispositif d'émission ionique selon l'invention est du type décrit dans la revendication 1. Des variantes avantageuses sont décrites dans les revendications dépendantes.

Avantageusement, la face active pseudo plane de l'électrode réceptrice est recouverte d'une pluralité de zones acérées en pointes, tranchantes et ou piquantes. Celles-ci émergent en relief de la face active. Elles présentent localement et à leur extrémité un faible rayon de courbure surfacique. Ces zones acérées sont également réparties quasiment uniformément sur cette face active, dans les deux directions géométriques de la surface et entourent les orifices.

### Objet

Cette combinaison géométrique locale particulière de l'électrode réceptrice permet d'établir un flux surfacique d'ions, en provenance de l'électrode corona et en direction de la face active pseudo plane de l'électrode réceptrice, ayant une intensité ponctuelle ionique présentant aux points voisins de la face active, une répartition spatiale d'intensité ionique à homogénéité accrue, par rapport à la variation de la distance spatiale entre - le point de projection correspondant de la face active de l'électrode réceptrice, - et la zone dite d'action ionique principale entourant le centre géométrique de la figure formée de la projection droite de la zone de décharge de l'électrode corona sur la surface active pseudo plane.

Cette homogénéité ionique s'établit dans une large zone efficace entourant le centre géométrique. En sorte que dans cette large zone efficace, on dépose une quantité quasi uniforme d'ions sur la surface des particules aérosols (d'une même classe de diamètre) transportées par le fluide au travers des orifices.

### Dessins et figures

Les figures 1.a et 1.b montrent de manière schématique, en coupe et en perspective, l'état de l'art antérieur en matière de dispositif électrostatique d'émission ionique.
Les figures 2.a et 2.b montrent de manière schématique, en coupe et en perspective, l'art antérieur le plus proche constitué par le dispositif électrostatique d'émission ionique équipant le système de purification bactériologique objet du brevet US 5,474,600.
Les figures 3.a et 3.b montrent de manière schématique, en coupe et en perspective, les principales dispositions d'un dispositif électrostatique d'émission ionique à homogénéisation de flux et dépôt d'ions selon l'invention.
Les figures 4, 5 et 6 montrent en perspectives trois variantes d'un dispositif électrostatique d'émission ionique selon l'invention.
La figure 7 montre en coupe et perspective un système d'émission bi-ionique selon l'invention traversé par un fluide chargé de particules aérosols.
Les figures 8 à 12 montrent les particularités de constitution d'un matériau conducteur recommandé par l'invention pour constituer l'électrode réceptrice poreuse d'un dispositif électrostatique d'émission ionique.
La figure 13 montre de manière schématique, en coupe, une variante de dispositif électrostatique d'émission ionique recommandée par l'invention, dont l'électrode réceptrice est réalisée à l'aide du matériau décrit figure 8 à 12.
La figure 14 montre de manière schématique, en coupe, une autre variante de système d'émission bi-ionique recommandée par l'invention, dont les électrodes réceptrices sont réalisées à l'aide du matériau décrit figure 8 à 12.
La figure 15 décrit, en coupe, une variante de système d'émission bi-ionique selon l'invention à électrodes corona disposées en série et en parallèle.
Les figures 16 et 17 montrent en coupe et en perspective, l'action d'un système d'émission bi-ionique tel que celui de la figure 14 sur des particules aérosols au sein d'un fluide en mouvement.

### Description détaillée de mise en oeuvre de l'invention

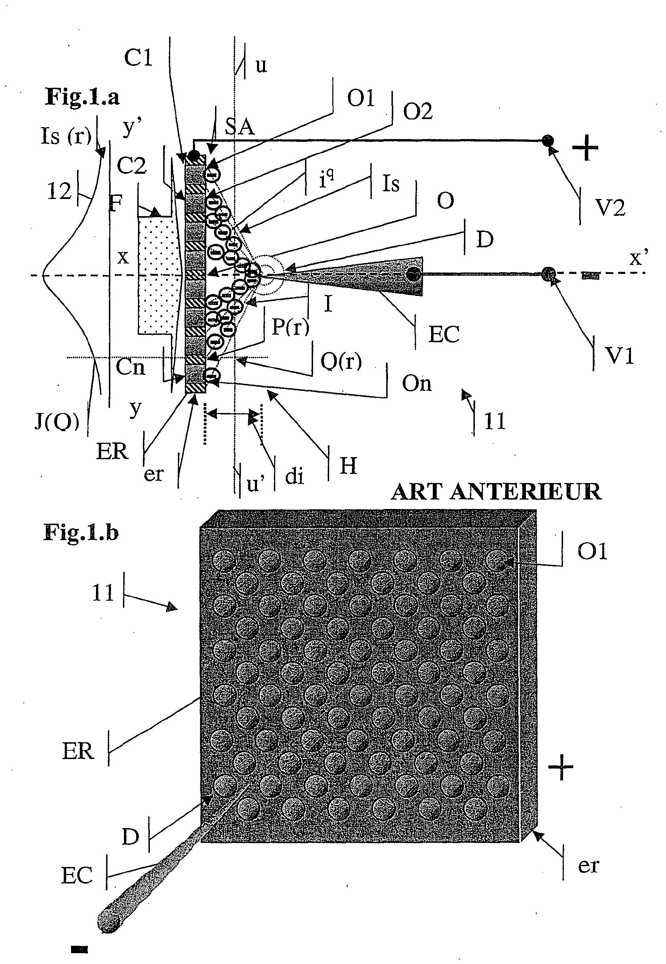

Les figures 1.a et 1.b montrent de manière schématique, en coupe (figure 1.a) et en perspective (figure 1.b), un dispositif électrostatique d'émission ionique (11) selon l'art antérieur. Le dispositif électrostatique (11) d'émission ionique selon l'art antérieur comporte une électrode conductrice corona (EC) à décharge, soumise à un potentiel électrique de décharge (V1) négatif, émettant un flux global (I) d'ions négatifs (i^{q}). Il comporte également une électrode réceptrice (ER) conductrice non-corona, soumise à un potentiel électrique de réception (V2) positif. L'électrode réceptrice (ER) présente une face active (SA) située en regard de l'électrode corona (EC). Elle est éloignée d'une distance (di) de sa zone de décharge (D) d'ions négatifs (i^{q}). L'espace (H) séparant la face active (SA) de l'électrode corona (EC) est libre. L'électrode réceptrice (ER) est poreuse. Elle présente une multitude de canaux de passage du fluide (C1, C2,...,Cn), traversant l'électrode réceptrice (ER), et débouchant par une multitude d'orifices (O1, O2, ...,On), sur sa face active (SA), selon un axe (xx') dit de flux, sensiblement perpendiculaire à la face active (SA). Un moyen de mise en pression du fluide (non représenté) assure le mouvement du fluide (F) notamment au travers de l'épaisseur (er) de l'électrode réceptrice (ER), sensiblement dans l'axe de flux (xx').

Selon l'art antérieur, la géométrie de surface de la face active (SA) est quelconque. Aucune disposition géométrique locale particulière de la face active (SA) n'est prévue autour des orifices (O1, ...) pour homogénéiser le flux d'ions négatifs (i^{q}).

On a représenté, dans la partie gauche de la figure 1.a, la courbe (12) de l'intensité (J(Q)) du flux surfacique (Is(r)) d'ions (i^{q}) dans un plan (uu') proche de la face (SA). Il s'agit des ions (i^{q}) - en provenance de l'électrode corona (EC), - et en direction de la face active pseudo plane (SA) de l'électrode réceptrice (ER). L'intensité (J(Q)) est représentée selon l'axe (xx'). L'intensité surfacique ponctuelle ionique (J(Q)) présente aux points Q(r) voisins de la surface active (SA), une répartition spatiale d'intensité ionique (J(Q)) très inhomogène. On constate qu'elle décroît fortement lorsque l'on s'écarte de l'axe central (xx') de flux du dispositif (11), c'est à dire avec l'accroissement de la distance spatiale (r), représentée selon l'axe (yy'), entre : - le point de projection (P(r)) correspondant de la face active (SA) de l'électrode réceptrice (ER), - et le centre géométrique (O) de la projection droite de la zone de décharge (D) de l'électrode corona (EC) sur la surface active (SA) pseudo plane.

Sur la figure 1.a, on a schématisé l'intensité locale du flux ionique Is(r) entre les deux électrodes (EC,ER) par des grappes d'ions (i^{q}). Le nombre d'ions représentés schématise, sur une radiale, l'intensité du flux d'ions dans cette direction. On constate que lorsque le point (Q(r)) et sa projection (P(r)) s'écartent du centre géométrique (O), le nombre d'ions atteignant en (Q(r)) la surface (SA), et par la même le flux surfacique Is(r), décroissent considérablement.

La figure 1.b schématise en perspective la configuration du dispositif (11).

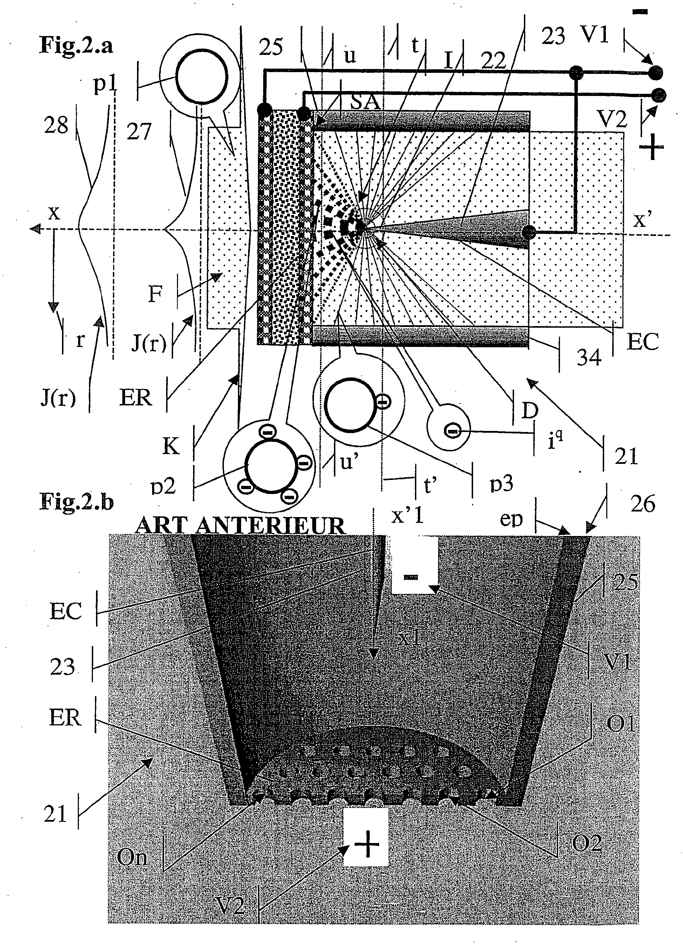

Les figures 2.a et 2.b montrent de manière schématique, en coupe (figure 2.a) et en perspective (figure 2.b), une variante de l'art antérieur en matière de dispositif électrostatique (21) d'émission ionique du type de celle décrite dans la demande de brevet US 5,474,600 au nom des demandeurs. On constate que l'électrode à décharge (EC) est constituée d'une pointe corona (22) placée à l'extrémité d'une aiguille (23) perpendiculaire à la surface active (SA). La pointe corona (22) est entourée d'un tube creux métallique (25) de faible épaisseur (ep) de paroi (26), colinéaire à l'axe de pointe (x1,x'1) de l'aiguille (23). L'électrode réceptrice (ER) est réalisée en métal cellulaire poreux. Le tube (25) et l'électrode (ER) sont liés et soumis au même potentiel électrique positif (V2). L'électrode conductrice corona (EC) à décharge est soumise à un potentiel électrique de décharge (V1) négatif. Elle émet un flux global (I) d'ions négatifs (i^{q}) dans sa zone de décharge (D). On a schématisé ce flux d'ions à l'aide de traits pointillés d'épaisseurs variables, représentant son intensité dans les différentes directions. En outre, on a grossi les différentes figures microscopiques intervenant dans le procédé (notamment les ions et les particules). On constate que du fait de la présence de l'électrode réceptrice (ER), le flux d'ions (i^{q}) en direction de la paroi intérieure du tube (25) est très faible (traits fins). La courbe (27) représente les variations de l'intensité ionique surfacique J(r) dans un plan (tt') perpendiculaire à l'axe (xx') et coupant le tube (25) sensiblement en son centre. L' intensité ionique Is(r) s'affaiblit rapidement à l'intérieur du tube (25) et dans sa partie centrale, en fonction de la distance (r) à l'axe de l'électrode corona (EC). On comprendra aisément que les variations d'intensité ionique J(r) dans le plan (tt') sont en 1/r. On a représenté également sur la courbe (28) les variations de l'intensité ionique J(r) dans un plan (uu') parallèle à la surface (SA) active de l'électrode réceptrice (ER) au voisinage de cette dernière. L'intensité ionique J(r) s'affaiblit également rapidement en fonction de la distance (r) à l'axe (xx') de l'électrode corona (EC).

La surface active (SA) de l'électrode réceptrice (ER) n'a aucune géométrie locale particulière. Comme cela est schématisé figure 2.b, on peut l'assimiler en première approximation à une plaque trouée (ER) munie d'une multitude d'orifices (O1, O2,...,On) sur sa face active (SA) et placée à une extrémité du tube (25).

Sur la figure 2.a on a représenté un flux (K) de fluide (F) que l'on fait pénétrer dans le tube (25) au travers de l'électrode réceptrice (ER). Le fluide (F) est chargé d'une multitude de particules (p1) aérosols. On peut considérer que ces particules (p1) sont neutres avant de pénétrer dans le dispositif (21). Après avoir traversé l'électrode réceptrice (ER), les particules se trouvent face au flux d'ions (i^{q}). Pour les raisons évoquées ci-dessus d'inhomogénéité du flux d'ions (i^{q}), on comprend que les particules (p2) aérosols transitant proche de l'axe (xx') reçoivent une quantité importante d'ions négatifs (i^{q}). Quatre sont représentés. Au contraire, les particules (p3) transitant de manière éloignée de l'axe (xx') reçoivent beaucoup moins d'ions négatifs (i^{q}). Un est représenté.

En conséquence, on comprend que ce système (21) selon l'art antérieur ne permet ni d'homogénéiser significativement un flux d'ions (i^{q}) au voisinage d'une électrode réceptrice (ER), ni d'homogénéiser de manière satisfaisante le flux d'ions (i^{q}) déposé sur des particules aérosols (p1,p2,p3,...) traversant de part en part le système (21).

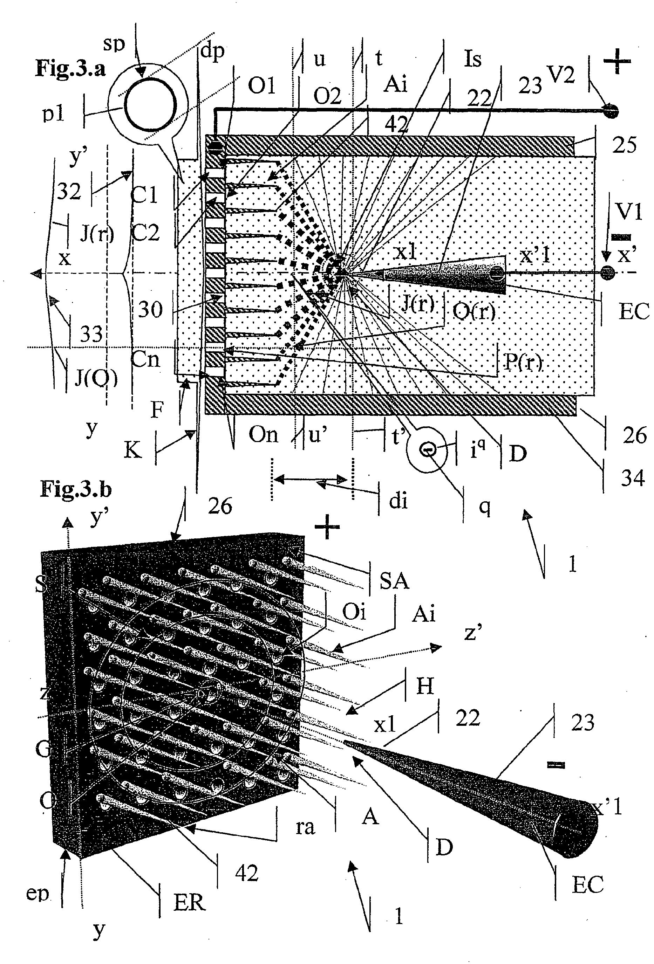

Les figures 3a et 3b décrivent en coupe et en perspective des améliorations au dispositif (1) d'émission ionique. Les dispositions générales de ce dispositif (1) selon l'invention communes aux dispositifs (11,21) de l'art antérieur telles que décrites en références 1.a à 2.b ci-dessus, sont reprises par le dispositif (1) avec les mêmes références et ne sont pas re-décrites.

Le dispositif électrostatique (1) d'émission ionique est destiné à déposer sur la surface (sp) d'une multitude de particules (p1) aérosols au sein d'un flux (K) de fluide (F), d'une même classe de diamètres (dp), une quantité quasi homogène d'ions (i^{q}) de charge (q). Ce dispositif électrostatique (1) est du type constitué par la combinaison entre - une électrode conductrice corona (EC) à décharge, soumise à un potentiel électrique de décharge (V1), émettant un flux global (I) d'ions (i^{q}) et - une électrode poreuse réceptrice (ER) conductrice non-corona, soumise à un potentiel électrique de réception (V2). L' électrode réceptrice (ER) présente une face active pseudo plane (SA), située en regard de l'électrode corona (EC) et éloignée d'une distance (di) de sa zone de décharge (D). L'espace libre (H) séparant sa face active (SA) de la pointe (22) de l'électrode corona (EC) est libre. Une multitude de canaux de passage du fluide (C1, C2,...,Cn) traversent l'électrode réceptrice (ER). Ils débouchent par une multitude d'orifices (O1, O2,...,On) de forme quasi circulaire sur sa face active (SA), selon l'axe (xx') dit de flux, sensiblement perpendiculaire à la face active (SA). Ils assurent, au voisinage de la face active (SA), un écoulement du fluide (F) selon des veines (non représentées) traversant l'électrode réceptrice (ER) et globalement sensiblement parallèles audit axe (xx') du flux (K) de fluide (F).

L'électrode (EC) à pointe corona (22) est entourée d'un tube creux (25) de faible épaisseur (ep) de paroi (26). Le tube creux (25) est colinéaire à l'axe de pointe (x1,x'1) de l'aiguille (23), selon l'axe (xx') du flux (K) de fluide (F) et situé en regard de la face active (SA) de l'électrode réceptrice (ER). Ce tube creux (25) englobe longitudinalement les veines de fluide (F) en regard de la face active (SA) et autour de l'aiguille (23). Préférentiellement, le tube creux (25) est constitué d'un matériau conducteur notamment métallique (34). Le tube creux (25) est porté au même potentiel électrique positif (V2) que l'électrode réceptrice (ER) pour effectuer une protection électrique vis-à-vis du potentiel négatif (V1) de l'électrode corona (EC).

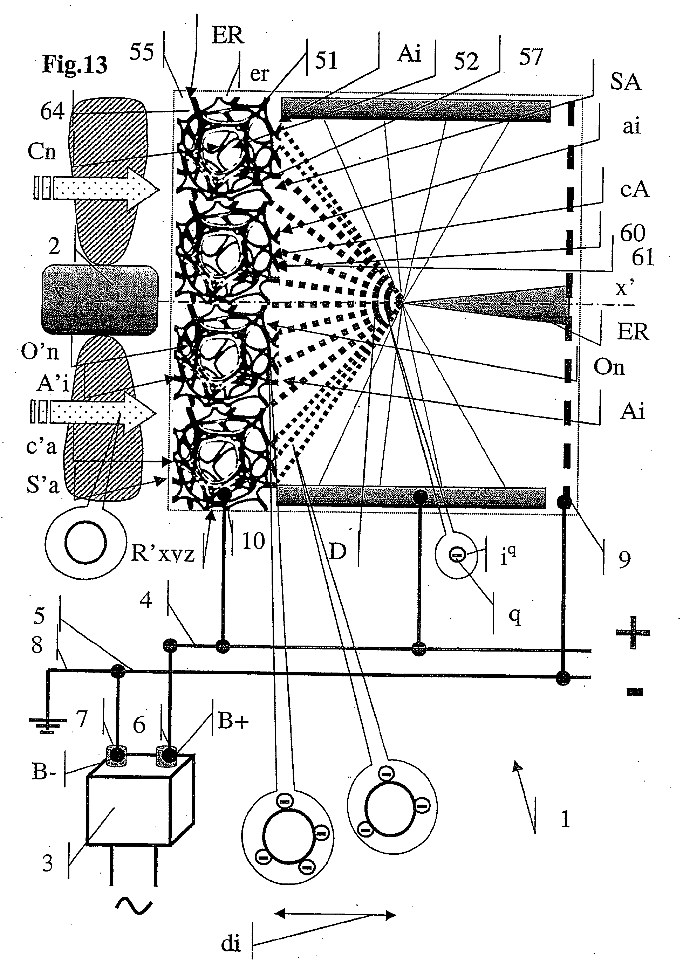

La figure 13 décrit des détails spécifiques complémentaires du dispositif (1) selon l'invention. Un moyen (2) de mise en pression du fluide (et notamment un ventilateur) assure le mouvement du fluide (F) notamment au travers de l'épaisseur (er) de l'électrode réceptrice (ER), sensiblement dans ledit axe de flux (xx'), et le long desdites veines (non représentées). Le dispositif (1) est équipé d'une source de courant électrique (3) comprenant au moins deux bornes métalliques (B+, B-) de différence de potentiel électrique assez élevé entre elles (de l'ordre de 5000V). Deux conducteurs (4,5) sont reliés chacun - par une extrémité (6,7) à une des bornes de potentiel (B+,B-) et/ou à la terre (8), - et par l'autre extrémité (9,10) respectivement à l'une différente des électrodes corona (EC) et réceptrice (ER). Ceci afin de soumettre les deux électrodes (EC, ER) à une différence de potentiel électrique (V1) <> (V2) suffisante pour assurer l'émission ionique d'ion (i^{q}) dans la zone de décharge (D).

On constate en référence à la figure 3.b que le dispositif électrostatique d'émission ionique (1) est doté d'une combinaison particulière de la géométrie locale de surface de la face (SA) de l'électrode réceptrice (ER). D'une part, sa multitude de canaux de passage (C1, C2, ...,Cn) de fluide (F) sont positionnés au travers de l'électrode réceptrice (ER) de telle manière que la multitude de leurs orifices (O1, O2, ...,Oi,...,On) soient répartis quasi uniformément sur la face active (SA), dans ses deux directions géométriques (yy',zz'). Et d'autre part, la face active (SA) pseudo plane de l'électrode réceptrice (ER) est recouverte d'une pluralité de zones acérées en pointes (tranchantes et ou piquantes) (Ai). Elles émergent en relief de la face active (SA). Elles présentent localement un faible rayon de courbure (ra) surfacique. Elles sont réparties quasiment uniformément sur cette face active (SA), dans ses deux directions géométriques (yy',zz'). Elles entourent les orifices (O1, O2,...,Oi,...,On).

Sur la figure 3.a, on a schématisé le flux d'ions (i^{q}) en provenance de la zone de décharge (D) de l'électrode corona (EC) à l'aide de traits pointillés d'épaisseurs variables représentant son intensité ionique (J(r)) dans les différentes directions. On constate que du fait de la présence de la pluralité de zones acérées en pointes (tranchantes et ou piquantes) (Ai) émergeant en relief de la face active (SA) et réparties uniformément sur cette dernière, le flux d'ions (i^{q}) en direction de la face active (SA) de l'électrode réceptrice a une homogénéisation accrue (les traits pointillés ont une largeur semblable).

La courbe (32), située dans la partie gauche de la figure 3.a, représente les variations de l'intensité ionique surfacique J(r) dans un plan (tt') perpendiculaire à l'axe (xx') et coupant le tube (25) sensiblement en son centre. L' intensité ionique surfacique J(r) s'affaiblit rapidement à l'intérieur du tube (25) en fonction de la distance (r) à l'axe de l'électrode (ER). En outre on constate que la présence de pointes (tranchantes et ou piquantes) (Ai) affaiblit le niveau global du flux d'ions en direction de la paroi intérieure du tube (25) par rapport à ce qu'il est (voir la courbe (27), figure 2.a) en absence de zones acérées (Ai). Il y a une action électrostatique prépondérante des pointes (Ai) (tranchantes et ou piquantes) de la face active (SA) vis-à-vis de celle de la paroi intérieure du tube 25.

On a représenté également sur la courbe (33) les variations de l'intensité ionique surfacique J(r) dans un plan (uu') parallèle à la surface (SA) active de l'électrode réceptrice (ER), au voisinage de cette dernière. On constate que, contrairement à la courbe (28), l'intensité ionique surfacique J(r) : - d'une part, s'affaiblit très faiblement en fonction de la distance (r) à l'axe (xx') de l'électrode corona (EC), - et, d'autre part, à un niveau global supérieur à celui qui est constaté (tel que sur la courbe (32), figure 2.a) quand on s'écarte de l'électrode réceptrice (ER). La disposition géométrique décrite plus haut a pour donc conséquence une homogénéisation du flux ionique.

En effet, le flux ionique surfacique (Is(r)) d'ions (i^{q}) en provenance de l'électrode corona (EC) en direction de la face active pseudo plane (SA) de l'électrode réceptrice (ER), a une intensité surfacique ponctuelle ionique J(Q(r)) présentant aux points Q(r) voisins de la face active (SA), une répartition spatiale d'intensité ionique J(r) à homogénéité accrue, par rapport à la variation de distance spatiale (r) entre - le point de projection (P(r)) correspondant de la face active (SA) de l'électrode réceptrice (ER), - et la zone d'action ionique principale (A) entourant le centre géométrique (O) de la figure (G) de la projection droite de le zone de décharge (D) de l'électrode corona (EC) sur la face active (SA) pseudo plane. Ceci est constaté dans une large zone efficace (S) entourant le centre géométrique (O) occupant toute la section du tube (25). En sorte que dans cette zone efficace (S), et donc dans toute la section du tube (25), on dépose au voisinage de l'électrode réceptrice (ER) une quantité quasi uniforme d'ions (i^{q}) sur la surface (sp) de particules aérosols (p1,...) d'une même classe de diamètres (dp) transportée par le fluide (F) au travers des orifices (O1, O2, ...,On). En outre, l'influence de l'inhomogénéité de dépôt ionique dans la partie centrale (tt') est très affaiblie pour les raisons décrites ci-dessus. En sorte que le dépôt d'ions (i^{q}) sur la surface de (sp) de particules aérosols (p1) traversant de part en part le système (1) est considérablement homogénéisé par rapport à ce que l'on obtiendrait au passage au travers d'un dispositif (11,21) selon l'art antérieur. Le résultat d'expériences de laboratoire menées par les demandeurs sur un dispositif (1) selon l'invention confirme cette particularité physique. Les inventeurs ont pu le constater expérimentalement en modifiant les électrodes réceptrices d'un dispositif tel que décrit dans la demande US 5,474,600 selon les enseignements de l'invention et en mesurant les résultats physiques de l'homogénéisation du dépôt ionique.

L'invention peut être avantageusement mise en oeuvre avec plusieurs types d'électrodes corona (EC).

Ainsi, selon la variante représentée sur les figures 3.a et 3.b, le dispositif (1) comporte la combinaison caractéristique entre : - la face active (SA) pseudo plane de l'électrode réceptrice (ER) recouverte d'une pluralité répartie quasi uniformément de zones acérées émergentes (Ai) entourant des orifices (O1, 02, ...,On) également quasi uniformément répartis, - et une électrode à décharge (EC) constituée d'une pointe corona (22) placée à l'extrémité d'une aiguille (23). Celle-ci est orientée selon un axe de pointe (x1,x1') perpendiculaire à la face active (SA) pseudo plane, en direction des zones acérées émergentes (Ai), et positionnée à une distance (di) en regard de la face active (SA).

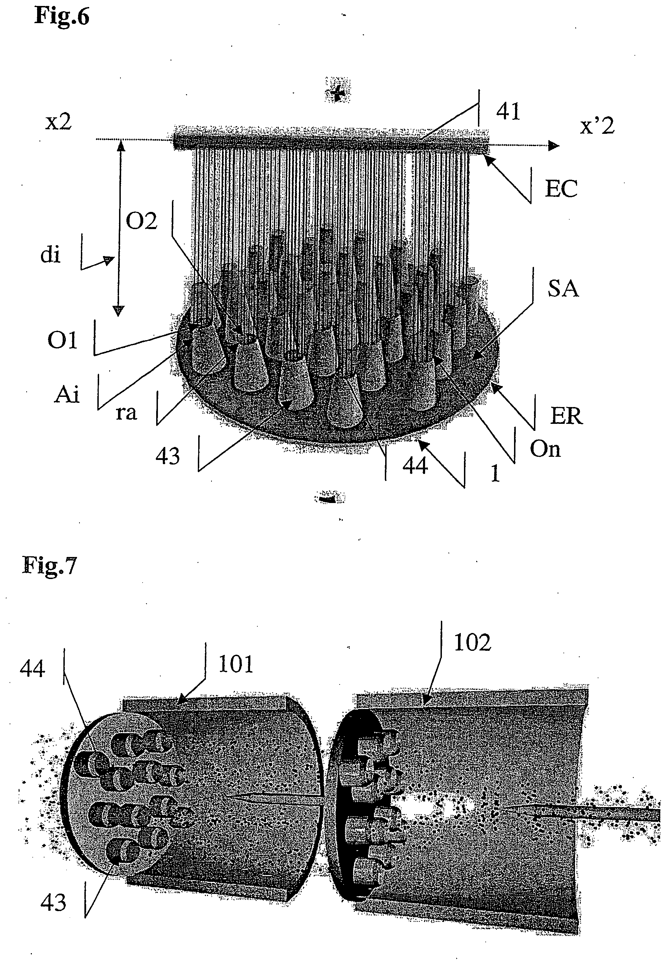

Selon la variante représentée figure 6, le dispositif (1) comporte la combinaison caractéristique entre: - la face active (SA) pseudo plane de son électrode réceptrice (ER) recouverte d'une pluralité répartie quasi uniformément de zones acérées émergentes (Ai) entourant des orifices (O1, O2,...,On) également quasi uniformément répartis, - et une électrode à décharge (EC) constituée d'un fil conducteur (41), orienté selon un axe (x2,x'2), sensiblement parallèle à la face active (SA) pseudo plane. Le fil conducteur (41) est sensiblement perpendiculaire aux zones acérées émergentes (Ai), et positionné à une distance (di) en regard de la face active (SA).

L'invention recommande plusieurs types de géométrie des zones acérées émergentes (Ai).

Selon la variante décrite figures 3.a et 3.b, la face active (SA) pseudo plane de l'électrode réceptrice (ER) est recouverte d'une pluralité répartie quasi uniformément de zones acérées émergentes (Ai) en forme de pointes acérées piquantes (42) uniformément réparties, présentant localement un faible rayon de courbure (ra) surfacique, entourant des orifices (O1, O2,...,On) uniformément répartis. Ces pointes acérées piquantes (42) pointent vers l'extérieur de la face active (SA), selon un axe (xx') sensiblement perpendiculaire, en direction de la zone de décharge (D).

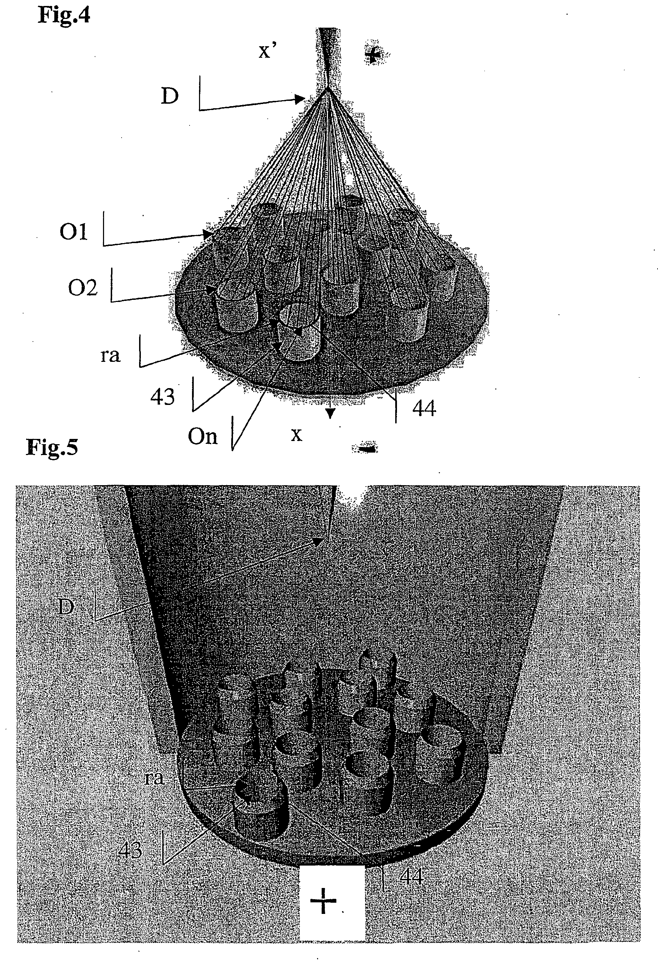

Selon les variantes décrites figures 4, 5 et 6, la face active (SA) pseudo plane de l'électrode réceptrice (ER) est recouverte d'une pluralité répartie quasi uniformément de cratères (43) à bords à bords acérés (Ai) refermés en pseudo cercle (44). Ils présentent sur leurs bords extrêmes une section à faible rayon de courbure (ra), entourant les orifices (O1, O2,...,On), et débouchant vers l'extérieur de la face active (SA), selon un axe (xx') sensiblement perpendiculaire, en direction de la zone de décharge (D).

La figure 13 représente la variante recommandée par l'invention de réalisation d'un dispositif électrostatique (1) d'émission ionique homogénéisée. L'électrode réceptrice (ER) est constituée par une structure poreuse (51). Ses zones acérées en pointes (tranchantes et ou piquantes) (Ai) sont réparties quasiment uniformément sur sa face active (SA) et reliées entre elles à l'aide de cette structure poreuse (51).

L'électrode réceptrice (ER) est constituée par une structure poreuse (51) à mailles alvéolaires (52) constituée d'un assemblage en réseau d'ailettes (Ai,an) à portions longilignes (57). La pluralité de ses zones acérées en pointes (tranchantes et ou piquantes) (Ai) réparties quasiment uniformément sur la face active (SA) est matérialisée par le sectionnement de la structure des mailles alvéolaires (52) de la structure poreuse (51) au droit de la face active (SA).

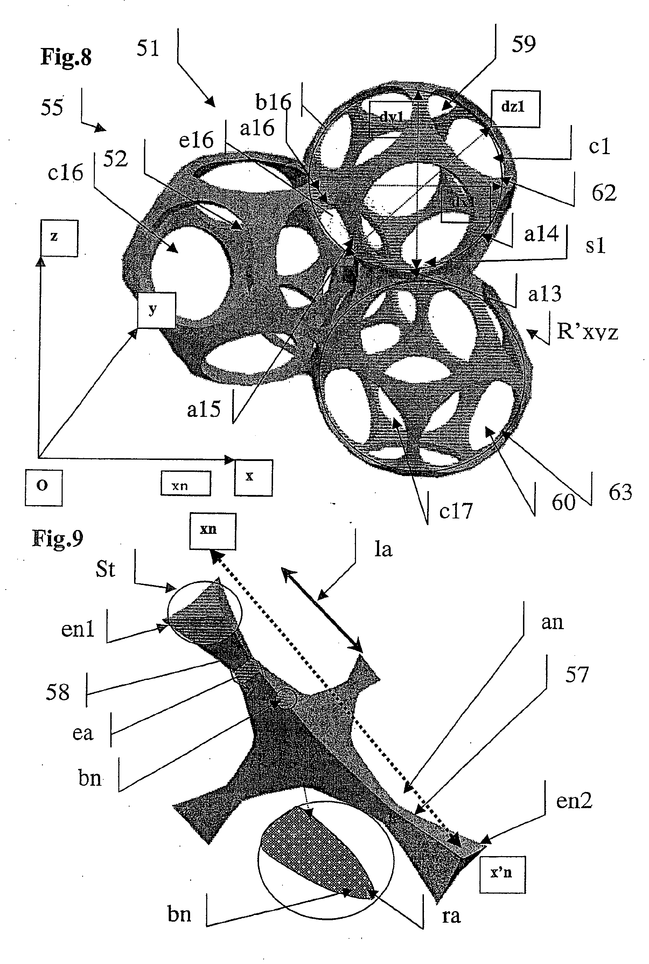

La variante préférée par invention de réalisation d'une électrode réceptrice (ER) selon l'invention apparaît Fig. 8 à 12. L'électrode réceptrice (ER) supportant la face active (SA) pseudo plane est matérialisée à l'aide d'un bloc poreux conducteur (55). Celui-ci est constitué à partir d'une structure poreuse (51) à mailles alvéolaires (52) pseudo répétitive formée d'une pluralité d'ailettes (..., an,...) à portions longilignes (57), constituées d'un matériau conducteur (58) notamment métallique.

Comme cela apparaît figures 8 et 9, les ailettes (an) possèdent une section transversale (St) fine, d'épaisseur (ea) très inférieure à leur dimension longitudinale (la). Elles comprennent au moins un bord latéral de fuite (bn) allongé et effilé (c'est-à-dire à faible rayon (ra) local transversal de courbure) orienté dans la direction (xn,x'n) de la longueur des ailettes (an).

Comme cela apparaît figure 8, les ailettes (...,a13, a14, a15,a16, ...,an, ...) sont physiquement et électriquement reliées entre elles par chacune de leurs extrémités (en1, en2,....) pour constituer un réseau tridimensionnel conducteur (R'xyz). Elles sont associées et regroupées géométriquement pour former une multiplicité de cellules élémentaires (c1,...,c16, c17,...), communicantes entre elles pour former les canaux de passage (C1, C2, ...,Cn) du fluide (F). Les ailettes (a13) intérieures au bloc poreux (55) sont majoritairement communes à plusieurs cellules élémentaires (..., cl,..., c17, ...). La majorité des ailettes (a13, a14, ...) associées appartenant à une même cellule (c1) intérieure au bloc poreux (55) entourent et jouxtent tangentiellement, par au moins l'une de leurs faces longitudinales latérales (s1, ....), une surface élémentaire virtuelle (62,63) propre et intérieure à chaque cellule élémentaire (c1,c17), de géométrie fermée, pour englober un volume cellulaire vide élémentaire (59,60) ramassé. C'est-à-dire que ses dimensions (dx1, dy1, dz1) transversales sont du même ordre de grandeur dans les trois directions (x, y, z). Le volume cellulaire vide élémentaire (59) de la majorité des cellules (c1) situées au centre du bloc poreux (55) débouche en regard des volumes vides élémentaires (..., 60, ...) de cellules voisines (c16, c17, ...) par au moins quatre (et préférentiellement douze) évidements (e16) au travers de leur surface élémentaire (62). Chacun des évidements (e16) est entouré par le bord latéral (b16) d'ailettes (..., a16...) appartenant à sa cellule (c16) et communes à des cellules voisines (..., c1, ...).

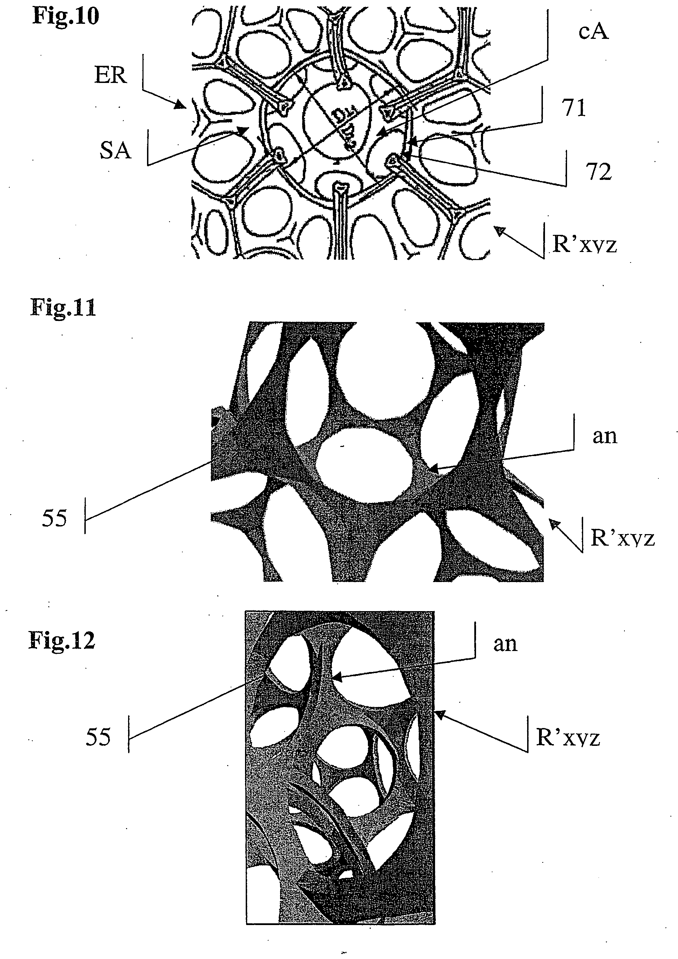

La figure 10 décrit schématiquement, de manière grossie, l'aspect de surface de la face (SA). On constate en référence aux figures 10 et 13, que le bloc poreux (55) est coupé de manière pseudo plane selon une face dite active (SA), en sectionnant de ce fait une multitude de cellules élémentaires (cA) de la paroi externe du réseau tridimensionnel (R'xyz), réparties uniformément sur la face active (SA). On ménage ainsi au droit de chaque cellule externe (cA) sectionnée du réseau tridimensionnel (R'xyz), une multitude de tuyères métalliques (71), présentant des bords (72) acérés de forme sensiblement circulaire en regard de la face active (SA).

On constate en référence à la figure 8 que les cellules (c16, c17, ...) du bloc poreux (55) sont positionnées selon leur répartition de plus grande densité et ont douze cellules voisines. Elles sont percées de douze évidements. Les cellules (c16, c17, ...) on une géométrie dodécaédrique.

Les figures 11 et 12 montrent schématiquement en perspective l'intérieur du bloc poreux (55).

L'électrode réceptrice (ER) du dispositif (1) représenté figure 13 est constituée d'une plaque (64) sensiblement plane présentant deux faces latérales pseudo planes sensiblement parallèles :
- une première face dite active (SA), est située en regard de l'électrode corona (EC) et éloignée d'une distance (di) de sa zone de décharge (D), - et une deuxième face (S'A). On remarque que les cellules externes (cA,c'A) sectionnées sont réparties en surface des deux faces latérales (SA, S'A). Comme cela a été décrit figure 10, elles ménagent au droit de chaque cellule externe (cA,c'A) sectionnée une multitude de tuyères (72), présentant des bords (71) pointus de forme sensiblement circulaire en regard de la face latérale d'appui (SA, S'A) correspondante de l'électrode réceptrice (ER). Une multitude de canaux (Cn) de passage du fluide (F) sont ménagés au travers des cellules intérieures, et traversent la plaque (64) constituant l'électrode réceptrice (ER). Ils relient chacune des deux faces (SA) et (S'A) de l'électrode réceptrice (ER). Ils débouchent par une multitude d'orifices (On) sur la première face active (SA), selon un axe (xx') dit de flux, sensiblement perpendiculaire à la première face active (SA). Ils débouchent également par une multitude d'orifices (O'n) sur la deuxième face (S'A), selon l'axe (xx') sensiblement perpendiculaire à la deuxième face (S'A). Du fait de la géométrie répétitive du réseau (R'xyz), la multitude de canaux de passage (Cn) du fluide (F) sont constitués et positionnés au travers de l'électrode réceptrice (ER) de telle manière que la multitude des orifices (On) soient répartis quasi uniformément sur la première face active (SA), et que la multitude des orifices (O'n) soient également répartis quasi uniformément sur la deuxième face active (S'A). Les deux faces actives (SA,S'A) pseudo planes de l'électrode réceptrice (ER) sont ainsi recouvertes chacune d'une pluralité de zones acérées en pointes (tranchantes et ou piquantes) (Ai,A'i). Elles émergent en relief les unes (Ai) de la face active (SA) et les autres (A'i) de la face active (SA). Elles présentent localement un faible rayon de courbure (ra) surfacique. Elles sont réparties quasiment uniformément sur la première face active (SA) et sur deuxième face (S'A), et entourent lesdits orifices (On) et (O'n).

Le procédé recommandé de fabrication d'électrodes réceptrices (ER) selon l'invention consiste à réaliser tout d'abord un réseau primaire diélectrique ou semi-conducteur. Ce réseau primaire est géométriquement identique à celui du réseau (R'xyz).

Pour réaliser le réseau primaire, on procède préférentiellement, comme cela apparaît figure 8, par intersection d'une multitude (préférentiellement douze) de surfaces fermées matérielles, ayant une enveloppe de faible épaisseur (ea), disposées sensiblement uniformément dans les 3 directions (x, y, z), et réalisées en un premier matériau diélectrique (notamment constitué par du polyuréthane).

Puis, on effectue une électrodéposition d'un second matériau (58) métallique, notamment du nickel, sur le réseau primaire. On réalise ainsi un réseau tridimensionnel primaire à surface métallique extérieure.

L'invention recommande de réaliser l'électrode réceptrice (ER) par électrodéposition de nickel sur un réseau primaire en polyuréthane.

Le procédé consiste tout d'abord à réaliser une plaque en réseau poreux primaire d'ailes (an) en polyuréthane. Ensuite on donne une conductibilité électrique au réseau primaire de polyuréthane en le plongeant dans une solution de sensibilisation du type : *Sn Cl₁ - 25 g*/*l; HCl - 40 ml*/*l.* On maintient le réseau primaire dans la solution pendant 10 minutes, puis on le lave à l'eau chaude pendant 10 minutes. On plonge ensuite le réseau primaire pendant 5 minutes dans un réservoir comprenant une solution d'activation du type :*Pd Cl1 - 0.5 g*/*l HCl* - *10 ml*/*l*. Puis on le lave à l'eau chaude pendant 10 minutes.

On dépose ensuite une couche chimique de nickel sur le réseau primaire. Pour ce faire on plonge le réseau primaire dans une solution du type (en *ml*/*l)*:

| | |
|---|---|
| *NiSO4 . 7H2O -* | *25* |
| *NaH2PO2 . H2O -* | *25* |
| *NaP2O7 . 10H2O -* | *50* |
| *NH4OH (28% sol). -* | *23* |

On maintient le réseau primaire dans la solution pendant 30 minutes. Puis on le lave à l'eau pendant 10 minutes.

Puis on effectue une électrodéposition de Nickel. Pour ce faire, on place deux anodes de nickel dans un bac d'électrolyse. On place le réseau primaire entre les deux anodes dans le bac. On remplit le bac avec une solution ayant une composition du type (en g/l) :

| | | | |
|---|---|---|---|
| *NiSO₄ . 7H₂O* | *- 250* | *1,4 butandiol* | *- 0.15* |
| *NiCl₂* | *- 50* | *Phthalimide* | *- 0.12* |
| *H₃BO₃* | *- 30* | *PH* | *-4.3 - 5.1* |

Les anodes et le réseau primaire sont reliés aux pôles différents d'un générateur de courant continu. (Anodes au pôle positif, réseau primaire au pôle négatif). On régule l'intensité du courant de déposition à 0.5 A/dm² pendant 7-10 minutes. On effectue 10 cycles successifs de déposition.

Après électrodéposition métallique du matériau conducteur (58), on effectue une extraction du squelette constitué par le matériau sous-jacent diélectrique par une action calorifique ou chimique sur la surface métallique extérieure du réseau primaire. Ainsi on réalise un réseau (R'xyz) entièrement métallique. Préférentiellement, on retire la structure sous jacente de polyuréthane par effet thermique. Pour ce faire, on place le réseau recouvert de nickel dans une atmosphère réductrice à une température de 1100°C pendant 4 heures. Le réseau (R'xyz) de l'électrode réceptrice (ER) est alors prêt.

L'électrode réceptrice (ER) du dispositif (1) de la figure 13 est constituée par une structure poreuse (51), à mailles alvéolaires (52) constituée d'un assemblage en réseau d'ailettes (an) à portions longilignes (57). La pluralité de ses zones acérées en pointes (tranchantes et ou piquantes) (Ai) réparties quasiment uniformément sur la première face active (SA) sont matérialisées par le sectionnement de la structure des mailles alvéolaire (52) de la structure poreuse (51) en réseau (R'xyz) au droit de la première face active (SA). De même, la pluralité de ses zones acérées en pointes (tranchantes et ou piquantes) (A'i) réparties quasiment uniformément sur la deuxième face active (S'A) sont matérialisées par le sectionnement de la structure des mailles alvéolaire (52) de la structure poreuse (51) au droit de la deuxième face (S'A).

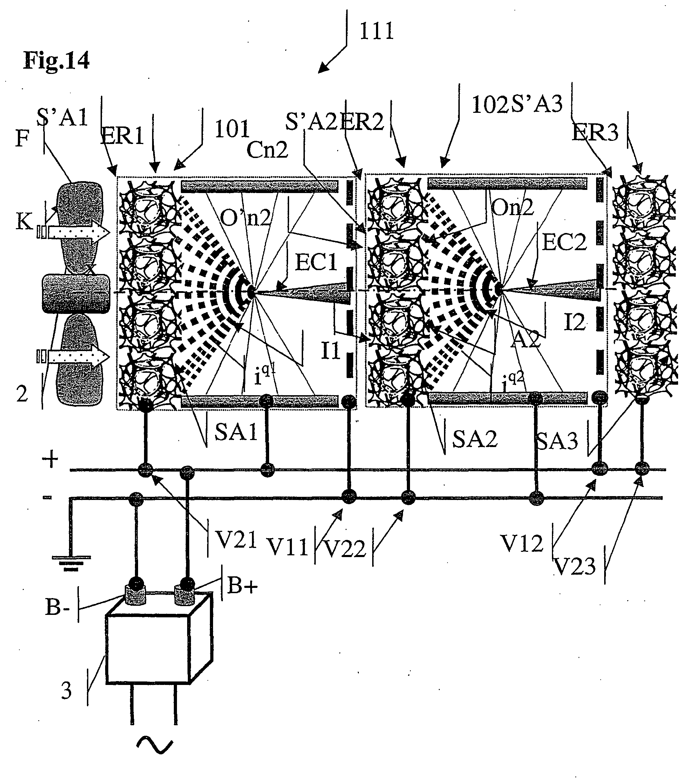

La figure 14 représente un système électrostatique (111) d'émission bi-ionique selon l'invention pour déposer sur la surface (sp) d'une même classe de diamètres (dp) d'une multitude de particules (p1, p2, ...) aérosols au sein d'un fluide (F), une quantité quasi homogène pour chaque signe, d'ions (i^{q1}) et (i^{q2}) de charges opposées. Ce système électrostatique (111) bi-ionique est constitué de manière caractéristique par la combinaison enchaînée en série de deux dispositifs électrostatiques (101,102) d'émission ionique de polarité inverse, du type (1) décrit ci-dessus. Les dispositifs électrostatiques (101,102) sont disposés en série selon un axe commun (xx') du flux (K) de fluide (F). On constate que les signes de polarité des couples (V11,V12) et (V21,V22) correspondant - d'une part, au potentiel électrique des électrodes conductrices corona (EC1,EC2), - et, d'autre part, au potentiel électrique des électrodes réceptrices (ER1,ER2) conductrices non-corona, de chacun des deux dispositifs électrostatiques (101,102) sont inversés. Un moyen (2) de mise en pression du fluide commun aux deux dispositifs (1,1') assure le mouvement du fluide (F) notamment au travers de l'électrode réceptrice (ER1) du dispositif (101) et (ER2) du dispositif (102), sensiblement dans l'axe commun (xx') du flux (K) de fluide (F).

Le système (111) comprend trois électrodes réceptrices (ER1,ER2,ER3) conductrices non-corona situées en série, et portées à des potentiels électriques alternés (V21,V22,V23). Elles ont été réalisées selon la méthode de fabrication décrite plus haut. Elles ont la géométrie montrée figure 8 à 12. Elles présentent chacune deux faces latérales pseudo planes sensiblement parallèles : - une première face (SA1,SA2,SA3), - et une deuxième face (S'A1, S'A2, S'A3). Une multitude de canaux de passage du fluide (Cni) avec (1<=i<=3) traversent chacune des électrodes réceptrices (ERi) avec (1<=i<=3) et relient chacune des deux faces (SAi) et (S'Ai) de chaque électrode réceptrice (ERi) avec (1<=i<=3). Ils débouchent par une multitude d'orifices (Oni) de forme quasi circulaire, sur la première face active (SA), selon un axe (xx') perpendiculaire à la première face active (SAi) correspondante, avec (1<=i<=3). Ils débouchent également par une multitude d'orifices (O'ni) de forme quasi circulaire, sur la deuxième face (S'Ai), selon un axe (xx') sensiblement perpendiculaire à la deuxième face (S'Ai), avec (1<=i<=3).

Il est recommandé que le système comporte au moins deux électrodes conductrices corona (EC1,EC2) à décharge, soumises à un potentiel électrique de décharge (V11,V12) alternée, émettant un flux global (I1) d'ions (i^{q1}), et (I2) d'ions (i^{q2}) de signes opposés. La première électrode corona (EC1) est placée entre le premier couple d'électrodes réceptrices (ER1,ER2). Sa zone de décharge (D1) est située en regard de la face active (SA1) de l'une (ER1) des deux électrodes réceptrices (ER1,ER2) de la première paire. La deuxième électrode corona (EC2) est placée entre le deuxième couple d'électrodes réceptrices (ER2,ER3). Sa zone de décharge (D2) est située en regard de la face active (SA2) de l'une (ER2) des deux électrodes réceptrices (ER2,ER3) de la deuxième paire.

Du fait du mode de fabrication (décrit plus haut) des électrodes (ER1,ER2,ER3), d'une part la multitude de canaux de passage (Cni) avec (1<=i<=3) de chaque électrode réceptrice (ERi) sont positionnés au travers de l'électrode réceptrice (ERi) de telle manière que la multitude des orifices (Oni) soient répartis quasi uniformément dans les deux directions (yy',zz') sur la première face active (SAi). De même la multitude des orifices (O'ni) sont répartis quasi uniformément sur la deuxième face active (S'Ai) dans les deux directions (yy',zz').

Il est recommandé que les deux faces (SA2,S'A2) pseudo planes de l'électrode réceptrice (ER2) centrale soient recouvertes chacune d'une pluralité de zones acérées en pointes (tranchantes et ou piquantes) (A2,A'2), émergentes en relief les unes (A2) de la première (SA2), et les autres (A'2) de la deuxième face active (SA'2). Elles présentent localement un faible rayon de courbure (ra) surfacique. Elles sont réparties quasiment uniformément dans les deux directions (yy',zz'). Sur la première face (SA2) elles entourent les orifices (Oni) correspondants. Sur la deuxième face (S'A2) elles entourent les orifices (O'ni) correspondants. En fait les trois électrodes réceptrices du système (111) représenté figure 14 sont identiques et ont leurs 2 faces semblables par construction.

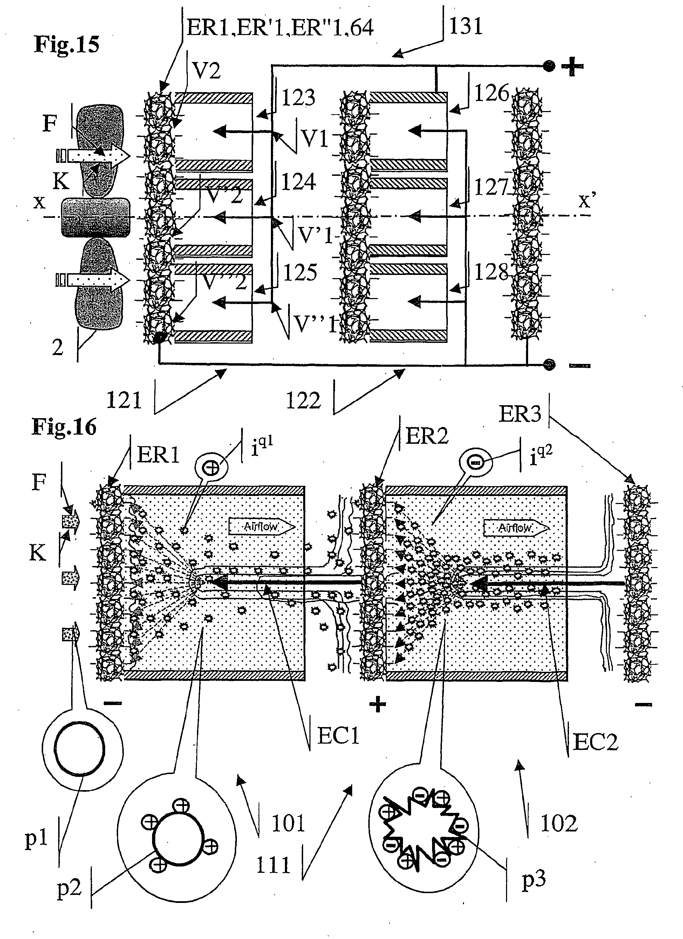

En référence à la figure 15, on voit une variante du système électrostatique (111) d'émission bi-ionique décrit à la figure 14. Le système électrostatique (131) a deux étages (121,122) d'émission ionique, organisés en série. Chaque étage (121,122) est constitué par la combinaison caractéristique en parallèle d'une pluralité de dispositifs électrostatiques. (123,124,125),(126,127,128) d'émission ionique du type (1) décrit plus haut. Les dispositifs électrostatiques (123,124,125) d'un même étage (121) sont disposés côte à côte transversalement par rapport à l'axe (xx') global du flux de fluide (F). Les signes de polarité des couples (V1,V'1,V"1) et (V2,V'2,V"2) d'un même étage (121), correspondant : - au potentiel électrique des électrodes conductrices corona, et au potentiel électrique des électrodes réceptrices conductrices non-corona, de chacun des deux dispositifs électrostatiques (123,124,125) sont similaires. Les électrodes réceptrices (ER1,ER'1,ER"1) des dispositifs électrostatiques (123,124,125) le constituant sont réalisées par une plaque poreuse commune (64) constituée par un réseau (R'xyz) d'ailettes (an) du type décrit plus haut, située transversalement à l'axe (xx') de flux (F).

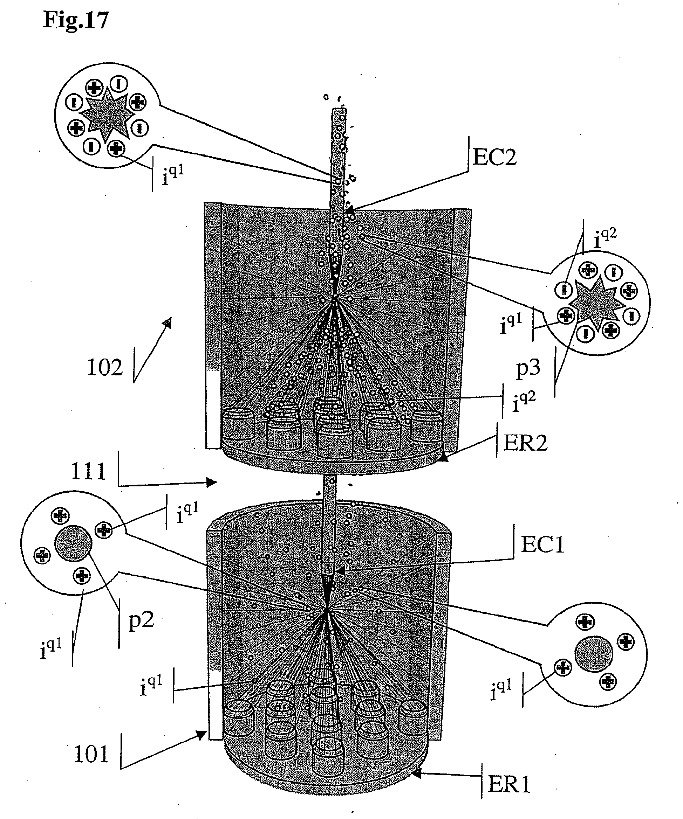

Le fonctionnement global du système électrostatique (111) d'émission bi-ionique décrit à la figure 14 est décrit en référence aux figures 16 et 17. Un flux (K) de fluide (F) chargé de particules (p1) est forcé à l'intérieur du système bi-ionique (111) à l'aide du moyen de mise en pression (2) (non représenté sur ces figures). Du fait des particularités fonctionnelles décrites plus haut (communes aux dispositifs électrostatiques (1) selon l'invention), au sein du dispositif (101) et grâce à l'action conjuguée de l'électrode corona (EC1) et de l'électrode réceptrice (ER1) selon l'invention, le flux global d'ions positifs (i^{q1}) rencontrés dans les veines de passages du flux (F), à la traversée du dispositif (101) selon l'axe (xx') de flux, est quasi homogène dans toute la section de son tube (25). Au passage du premier dispositif (101), les particules (p2) sont donc chargées d'une quantité quasi homogène d'ions positifs (i^{q1}). Quatre ions positifs (i^{q1}) sont représentés sur les particules (p2).

De même, au sein du dispositif (102) et grâce à l'action conjuguée de l'électrode corona (EC2) et de l'électrode réceptrice (ER2) selon l'invention, le flux global d'ions négatifs (i^{q2}) rencontrés dans les veines de passages du flux (F), à la traversée du dispositif (102) selon l'axe (xx') de flux, est quasi homogène dans toute la section de son tube (25). Au passage du deuxième dispositif (102), les particules (p3) préalablement chargées de manière quasi homogène d'ions positifs (i^{q1}) sont chargées également d'une quantité quasi homogène d'ions négatifs (i^{q1}). Quatre ions positifs (i^{q1}) et quatre ions négatifs (i^{q2}) sont représentés sur les particules (p3).

Ainsi, à l'issue de la traversée du système bi-ionique (111), les particules (p3) sont recouvertes d'une quantité homogène d'ions de signes opposés (i^{q1}, i^{q2}).

On obtient ainsi un résultat physique (représenté par une forme en étoile des particules (p3)) consistant en une libération d'énergie à l'intérieur des particules (p3) ayant traversé successivement les deux dispositifs électrostatiques (101,102) du système bi-ionique (111). On comprend que, suivant les applications industrielles recherchées, cette libération énergétique permet, par recombinaison ionique, d'infliger aux particules (p3) des conséquences mécaniques, physiques, chimiques, énergétiques ... d'intensité maîtrisée.

Une particularité du système bi-ionique (111) selon l'invention est que les particules, tout d'abord chargées de charges positives (^{q1}) au passage au travers du dispositif (101), subissent à l'intérieur du dispositif (102), après passage de l'électrode (ER2) et face à l'électrode corona (EC2), la combinaison de deux effets :
- un effet de concentration de leur trajet en direction de la zone de décharge de l'électrode corona (EC2) de charge électrique (négative) opposée, et
- un effet de vent d'ions négatifs (i^{q2}) orienté selon des radiales sensiblement colinéaires et de sens opposé au mouvement des particules (p3), dans la zone (H) séparant les deux électrodes (EC2,ER2) du dispositif (102).

Cela apparaît sur les figures 16 et 17 par des radiales fléchées issues de l'électrode corona (EC2) du dispositif (102) en direction de l'électrode réceptrice (ER2). Ceci provoque un effet de "targetisation" des chocs entre particules (p3) et ions négatifs (i^{q2}) qui - d'une part, augmente l'efficacité (la quantité) du dépôt d'ions négatifs (i^{q2}) sur les particules (p3), - et, d'autre part, accroît l'homogénéité du dépôt d'ions négatifs (i^{q2}) sur les particules (p3), (du fait que les particules (p3) transitent sur des radiales soumises à une intensité ionique équivalente).

Les inventeurs ont constaté expérimentalement que la combinaison du système bi-ionique (111) selon invention aboutit à une homogénéité (exprimée en terme d'écart type) des dépôts d'ions positifs (i^{q1}) et d'ions négatifs (i^{q2}) sur des particules (p3), qu'ils ont mesurée être environ +-10%. Ceci a été mesuré avec des dispositifs (101,102) de diamètre de tube 5 cm, équipés chacun d'une pointe corona distante de 2,5 cm de l'électrode réceptrice et soumises à une différence de potentiel de +- 5000V. L'expérimentation a été opérée sur des classes de diamètres de particules s'étendant de 0,01 micron à 3 microns. Lorsque la même expérimentation a été effectuée avec des dispositifs d'émission ionique de dimension équivalente selon fart antérieur, l'homogénéité de dépôt ionique (exprimée en terme d'écart type) était d'environ +-80% dans les mêmes conditions.

### Avantages de l'invention par rapport à l'art antérieur

On constate donc que les dispositifs (1) selon l'invention permettent d'homogénéiser le flux d'ions en regard de la face active plane d'une électrode réceptrice (ER).

On constate également que les dispositifs (1) selon l'invention permettent de soumettre une multitude de particules (telles que : poussières, bio-aérosols ou molécules spécifiques, ...) aérosols au sein d'un fluide en mouvement, à l'action d'un flux ionique provenant de l'électrode à décharge corona (EC), dont l'intensité globale à l'intérieur d'une quelconque veine de flux située à l'intérieur du tube (25) est quasi homogène à la traversée de tube.

On constate de surcroît que les dispositifs (1) selon l'invention permettent de déposer sur la surface de cette multitude de particules aérosols (appartenant à une même classe de diamètres) une quantité quasi homogène d'ions (i^{q}).

On constate aussi que les dispositifs (1) selon l'invention permettent d'augmenter l'efficacité du flux d'ions (i^{q}) en direction de l'électrode (ER) et donc dans le sens des veines de flux, en réduisant le flux radial moins efficace et inhomogène en direction de la paroi (26) du tube (25).

On constate enfin que les systèmes bi-ioniques (111) selon l'invention permettent de déposer une quantité homogène d'ions de signes opposés (i^{q1}, i^{q2}) sur la surface des particules.

### Applications industrielles de l'invention

L'invention a des applications industrielles dans de nombreux domaines, notamment physiques, chimiques, énergétiques, biologiques où il convient de déposer sur des particules aérosols une quantité homogène d'ions, en vue de leur infliger un effet physique maîtrisé et quasi-uniforme.

Une application immédiate concerne le domaine de la peinture électrostatique. D'autres applications sont évidentes dans le domaine de la filtration électrostatique, visant à ce que l'ensemble des particules traversant un filtre électrostatique soit quasi uniformément pré-chargées. Les inventeurs ont mis en oeuvre l'invention dans le domaine de la biologie pour soumettre la paroi extérieure de micro-organismes à une action énergétique maîtrisée modifiant de manière quasi homogène leur structure et leur configuration interne.

Bien que la description ci-dessus contienne de nombreuses spécificités, celles-ci ne doivent pas être considérées comme limitant l'objet de l'invention mais comme offrant des illustrations de certains des modes de mise en oeuvre préférés de l'invention.

La portée de l'invention doit être considérée par rapport aux revendications ci-après.

## Revendications

1. Dispositif d'émission ionique comprenant une électrode corona à décharge (EC) pour émettre des ions, **caractérisé en ce qu'**il comprend une électrode réceptrice (ER) poreuse métallique ayant une structure de mousse métallique à cellules ouvertes et une surface active (SA) pseudo plane qui fait face à l'électrode de décharge, la surface active ayant une pluralité de points sensiblement acérés (AI).

2. Dispositif d'émission ionique selon la revendication 1, dans lequel l'électrode réceptrice (ER) est formée par électro-déposition d'un matériau métallique (58) sur un réseau diélectrique primaire formé à partir d'un matériau polyuréthane.

3. Dispositif d'émission ionique selon la revendication 1 ou 2, dans lequel les points acérés (AI) sont distribués de manière quasi uniforme à travers la surface active de l'électrode réceptrice (ER).

4. Dispositif d'émission ionique selon l'une quelconque des revendications précédentes, comprenant en outre une alimentation de puissance (3) adaptée à appliquer un premier potentiel à l'électrode réceptrice (ER) et un second potentiel à l'électrode corona à décharge (EC), dans lequel la différence de potentiel entre les premier et second potentiels est au moins d'environ 5000 volts.

5. Dispositif d'émission ionique selon l'une quelconque des revendications précédentes, dans lequel l'électrode corona à décharge (EC) comprend une électrode d'ionisation du type à aiguille (23) ayant un axe (xl, xl') qui est sensiblement perpendiculaire à la surface active de l'électrode réceptrice.

6. Dispositif d'émission ionique selon l'une quelconque des revendications précédentes, comprenant en outre une chambre d'électrode (25) qui est alignée axialement avec l'électrode corona à décharge (EC) de telle sorte qu'un axe de la chambre d'électrode est sensiblement perpendiculaire à la surface active de l'électrode réceptrice (ER).

7. Dispositif d'émission ionique selon la revendication 6, dans lequel l'alimentation de puissance (3) est en outre adaptée à appliquer le premier potentiel à la chambre d'électrode de sorte que la chambre d'électrode et l'électrode réceptrice sont maintenues au même potentiel de tension.

## Patentansprüche

1. lonen-Emissionsvorrichtung, eine Korona-Entladungselektrode (EC) zur Emission von Ionen aufweisend, **dadurch gekennzeichnet, dass** sie eine poröse, metallische Empfangselektrode (ER) umfasst, die eine offenzellige Metallschaumstruktur und eine im Wesentlichen ebene aktive Oberfläche (SA) aufweist, die der Entladungselektrode zugewandt ist, wobei die aktive Oberfläche eine Vielzahl im Wesentlichen spitzer Punkte (AI) aufweist.

2. lonen-Emissionsvorrichtung nach Patentanspruch 1, in der die Empfangselektrode (ER) durch Galvanostegie eines metallischen Werkstoffs (58) auf ein dielektrisches Grundgitter aus einem Polyurethanwerkstoff ausgebildet wird.

3. lonen-Emissionsvorrichtung nach Patentanspruch 1 oder 2, in der die spitzen Punkte (AI) quasi-gleichförmig über die aktive Oberfläche der Empfangselektrode (ER) verteilt sind.

4. lonen-Emissionsvorrichtung nach irgendeinem der vorangehenden Patentansprüche, außerdem eine Leistungsspannungsversorgung (3) umfassend, geeignet, ein erstes Potential an die Empfangselektrode (ER) und ein zweites Potential an die Korona-Entladungselektrode (EC) anzulegen, wobei die Potentialdifferenz zwischen dem ersten und dem zweiten Potential mindestens ungefähr 5000 Volt beträgt.

5. lonen-Emissionsvorrichtung nach irgendeinem der vorangehenden Patentansprüche, in der die Korona-Entladungselektrode (EC) eine lonisationselektrode vom Nadeltyp (23) mit einer Achse (x1, x1') umfasst, die im Wesentlichen senkrecht auf der aktiven Oberfläche der Empfangselektrode steht.

6. lonen-Emissionsvorrichtung nach irgendeinem der vorangehenden Patentansprüche, außerdem eine Elektrodenkammer (25) umfassend, die mit der Korona-Entladungselektrode (EC) axial ausgerichtet ist, derart dass eine Achse der Elektrodenkammer im Wesentlichen senkrecht auf der aktiven Oberfläche der Empfangselektrode (ER) steht.

7. lonen-Emissionsvorrichtung nach Patentanspruch 6, in der die Leistungsspannungsversorgung (3) außerdem geeignet ist, das erste Potential an die Elektrodenkammer anzulegen, derart dass die Elektrodenkammer und die Empfangselektrode auf demselben Spannungspotential gehalten werden.

## Claims

1. An ionic emission device comprising a discharge corona electrode (EC) for emitting ions, **characterized in that** it comprises a metallic porous receptor electrode (ER) having a metallic foam structure with open cells and a pseudo-planar active surface (SA), which faces the receptor electrode, the active surface having a plurality of substantially sharp points (AI).

2. The ionic emission device according to the claim 1, wherein the receptor electrode (ER) is formed by electroplating of a metallic material on a primary dielectric mesh formed from a polyurethane material.

3. The ionic emission device according to the claim 1 or 2, wherein the sharp points (AI) are quasi-uniformly distributed across the active surface of the receptor electrode (ER).

4. The ionic emission device according to any one of the preceding claims, further comprising a power supply (3) adapted to apply a first potential to the receptor electrode (ER) and a second potential to the discharge corona electrode (EC), wherein the potential difference between the first and second potentials is at least approximately 5 000 volts.

5. The ionic emission device according to any one of the preceding claims, wherein the discharge corona electrode (EC) comprises a needle type ionizing electrode (23) having an axis (xl, xl') that is substantially perpendicular to the active surface of the receptor electrode.

6. The ionic emission device according to any one of the preceding claims, further comprising an electrode chamber (25) that is axially aligned with the discharge corona electrode (EC) such that an axis of the electrode chamber is substantially perpendicular to the active surface of the receptor electrode (ER).

7. The ionic emission device according to the claim 6, wherein the power supply (3) is further adapted to apply the first potential to the electrode chamber so that the electrode chamber and the receptor electrode are maintained at the same voltage potential.
